# EUROPEAN PATENT APPLICATION

(11) **EP 4 331 733 A1**
(43) Date of publication of application: **06.03.2024**
(21) Application number: 21938767.7
(22) Date of filing: 20.07.2021
(51) Int. Cl.: B05C 11/10

(54) **AUTOMATIC GLUE SUPPLY AND MIXING SYSTEM BASED ON CONTINUOUS GLUE CONVEYING MODE**

(30) Priority: 25.04.2021 CN 202110449942
(71) Applicant: Sinomech Corporation, Guangzhou, Guangdong 510800 (CN)
(72) Inventor: ZHENG, Dingjie, Guangzhou, Guangdong 510800 (CN); ZUO, Guangshen, Guangzhou, Guangdong 510800 (CN); LI, Junhong, Guangzhou, Guangdong 510800 (CN); LU, Yanghua, Guangzhou, Guangdong 510800 (CN); LIU, Hongtao, Guangzhou, Guangdong 510800 (CN)
(74) Representative: Haseltine Lake Kempner LLP
(86) International application number: PCT/CN2021/107394
(87) International publication number: WO 2022/227300

(57) **Abstract**

An automatic adhesive supply and metering mixing system based on a continuous supply mode, comprising an adhesive tank unit, a metering and pumping unit, a mixing unit, an adhesive storage are for a laminator, and level sensors for monitoring the actual adhesive level in the adhesive storage are for the laminator. The metering and pumping unit conveys adhesive from the adhesive tank unit to the mixing unit, which blends the adhesive uniformly and then transports the mixed adhesive onto the adhesive storage area for the laminator. The level sensors trigger the gear pump of the metering and pumping unit based on the actual adhesive level. Target adhesive levels and level deviation limits are set for the adhesive storage area, and the level sensors control the gluing speed of the gear pump based on the level deviation limits to achieve a continuous adhesive supply with no breaks. This invention can achieve continuous adhesive supply, so significantly improve the stability of the entire adhesive supply system, by substantially reducing the frequency of gear pump starts and stops during the whole production, mitigating the risks like gluing asynchronization associated with conventional frequent start and stop or valve opening and closing, thereby fundamentally eliminating troubles like local irregular incomplete curing in the laminated reels. The adhesive gluing speed can vary with the laminator speed, ensuring stable adhesive performance.

## Description

### TECHNICAL FIELD

The present invention relates to the field of adhesive supply and mixing for two-component adhesives, particularly an automatic adhesive supply and metering mixing system based on a continuous adhesive supply delivery mode.

### BACKGROUND

Typically metering mixers for two-component adhesives are equipped with an automatic mixing system consisting of adhesive tanks, adhesive metering and pumping supply units, adhesive pipelines, mixing units, adhesive storage area, and sensors for monitoring the adhesive level in the adhesive storage area.

The adhesive metering and pumping supply units comprise adhesive tanks and pumping units for two-single adhesives, commonly referred to as adhesive A and adhesive B, and these two adhesive metering and supply units have similar structures, primarily consisting of drive adhesive tanks, gear pumps, drive motors, gearboxes, piping, and their control systems.

In existing automatic metering and pumping systems, adhesive supply is carried out intermittently, with the gear pumps intermittently rotating in a cyclical fashion: start - run - stop - start again. The basic operational principle is as follows: an upper limit and a lower limit for the working adhesive level is set for the adhesive storage area, and when the adhesive level in the adhesive storage area falls to the lower limit, the gear pump motor starts to supply adhesive from the tank to the storage area. When the adhesive level in the adhesive storage area reaches the upper limit, the gear pump stops running and supplying adhesive, and adhesive supply pauses, and this intermittent cycle repeats. During each stable working stage, the gear pump's speed remains unchanged.

This adhesive supply method has several drawbacks: 1. There is backlash between pump gears, leading to adhesive output variations during the intermittent and repeated starts and stops, resulting in an imbalance of the mixing ratio; 2. The repeated starting and stopping of the gear pump leads to fluctuations in internal pressures inside pipeline, affecting adhesive supply stability and causing issues such as uneven mixing and localized incomplete curing or drying in laminates, etc.; 3. Within each work cycle, the gear pump's speed and the amount of adhesive pumped are roughly the same. When the amount of adhesive supplied to a laminator is low, the adhesive may remain or dwell in the storage area for an extended period, or longer open time for the adhesive, causing the viscosity of the adhesive to become higher than expected, affecting adhesive application consistency.

### SUMMARY

The present invention can provide an automatic adhesive supply and metering mixing system based on a continuous adhesive supply mode to address the issues in the existing technology.

To address the above-mentioned technical problems, the technical solution of the present invention is an automatic adhesive supply and metering mixing system based on a continuous adhesive supply mode with no breaks. The new system comprises an adhesive tank unit, a metering and pumping unit, a mixing unit, an adhesive storage area for a laminator, and level sensors for monitoring the adhesive level in the adhesive storage area for the laminator. The metering and pumping unit conveys adhesive from the adhesive tank unit to the adhesive storage area for the laminator via the mixing unit. The level sensors trigger the gear pump of the metering and pumping unit based on the adhesive level data. A target adhesive level and upper and lower deviation limits are set for the adhesive storage area for the laminator. The level sensors control the gear pump's working speed to achieve continuous adhesive supply without interruption, keeping the actual adhesive level in-between the deviation limits.

The basic operating principle is as follows: when signals are received from the level sensors or when commands are received from a laminator control computer or the user, the gear pumps for each respective adhesive, both adhesive A and B, start to transport adhesives from their respective tanks to the mixing head via the conveying pipeline. The two single adhesives are subsequently blended by the mixing head through the static mixing tube. The mixed adhesive is then transported to the adhesive storage area, ready for use in the coating station. The upper and lower deviation limits of the adhesive level in the adhesive storage area can be set offline or online, or they can be set by default by the system. When the actual adhesive level is between the upper and lower limits, the gear pump operates continuously without interruption, and their speed remains the same. When the system operates normally at a certain speed and a certain coating quantity, the gear pumps A and B rotate at a corresponding constant speed to keep the liquid level always the same, within the upper and lower limit range. When the speed of the laminator or the coating quantity changes, the gear pump's speed also changes accordingly to maintain the desired adhesive levels. In other words, the gear pumps A and B change speed to match the speed of the laminator or the quantity of adhesive applied. When the above factors are accurately matched, the adhesive level in the storage area remains unchanged for a long time, achieving an ideal state with constant adhesive level.

This invention can achieve continuous adhesive supply, significantly improving the stability of the entire adhesive supply system, which substantially reduces the frequency of gear pump starts and stops, reducing the risks like asynchronization associated with frequent starts/stops or valve openings/closings, thereby fundamentally solving issues like asynchronized adhesive supply and local irregular incomplete curing. Furthermore, the adhesive supply speed can vary with the system speed, reducing the adhesive's dwell time or open time and enhancing adhesive coating uniformity and consistency.

As an improvement, the adhesive tank unit comprises a first adhesive storage tank and a second adhesive storage tank. The metering and pumping unit comprises a gear pump and conveying pipeline. The mixing unit comprises a mixing head and a static mixing tube. The adhesive storage area for the laminator is located between a storage cylinder and a metering cylinder of the coating station. The level sensors are positioned above the adhesive storage area for the laminator.

As an improvement, level sensors are placed above both sides or ends of the adhesive storage area for the laminator, and the average adhesive level measured by the two level sensors is considered as the actual adhesive level.

As an improvement, the adhesive supply method of the metering and pumping unit includes the following steps:
(1) when the coating station is ready to start, the metering and pumping unit rapidly supplies adhesive to the adhesive storage area for the laminator until the set target level is reached; then, the metering and pumping unit continues to supply adhesive at the lowest gear pump speed.
(2) when the laminator speed reaches the target speed, the gear pump starts running in sync with the laminator; as the laminator accelerates, the gear pump accelerates, and as the laminator decelerates, the gear pump decelerates accordingly.
(3) taking the target level as the objective, when the adhesive level is above the upper deviation level limit, the gear pump is forced to decelerate; and when the adhesive level is below the lower level limit, the gear pump is forced to accelerate, so as to thereby ensure continuous adhesive supply within the deviation limit range of the target level.

As an improvement, a top line and a bottom line are set in the adhesive storage area for the laminator. When the adhesive level reaches the top line, the laminator accelerates, or the gear pump stops running. When the adhesive level reaches the bottom line, the laminator decelerates or stops.

As an improvement, when the laminator stops running due to a changeover of reels or jobs, the gear pump supplies adhesive at the lowest speed. If the top line adhesive level is reached when the laminator is running, steps (1) to (3) are executed. If the top line adhesive level is reached when the laminator is not running, the gear pump stops running. When the laminator is stopped by pressing the emergency stop button, the gear pump also stops running immediately. When the laminator stops working, the gear pump stops running.

As an improvement, the adhesive supply method of the metering and pumping unit includes the following steps:
(1) when the coating station is ready to start, the metering and pumping unit rapidly supplies adhesive to the adhesive storage area for the laminator until the target level is reached; then, the gear pump continues to supply adhesive at the lowest its speed.
(2) when the difference between the actual adhesive level and the target adhesive level exceeds or equals to the level deviation upper and lower limits, the gear pump will automatically adjust its speed, either decelerating or accelerating accordingly.

As an improvement, if the difference between the adhesive actual level and the target level is greater than or equal to the adhesive level deviation allowed and is greater than or equal to zero, the gear pump will decelerate. If the gear pump is running at its lowest speed, it will stop until the difference falls within the adhesive level deviation range, and then pump will resume its continuous operation. If the difference between the actual adhesive level and the target level is greater than or equal to the adhesive level deviation allowed and is less than or equal to zero, the gear pump will accelerate.

In comparison to existing technology, the present invention can offer the following advantages: continuous adhesive supply, significantly improving the stability of the entire adhesive supply system, which substantially reduces the frequency of gear pump starts and stops, mitigating the risks like asynchronization associated with frequent starts or valve openings, thereby fundamentally solving issues like asynchronized adhesive supply and local irregular incomplete curing. Furthermore, the adhesive supply speed can vary with the laminator speed, reducing the adhesive's dwell time or open time and enhancing adhesive coating uniformity and consistency.

### BRIEF DESCRIPTION OF THE DRAWINGS

Figure 1 is a schematic diagram of the adhesive level for continuous adhesive supply in mode one.
Figure 2 is a flowchart of the method of continuous adhesive supply in mode one.
Figure 3 is a schematic diagram of the adhesive level for continuous adhesive supply in mode two.
Figure 4 is a flowchart of the method of continuous adhesive in supply mode two.

### DETAILED DESCRIPTION

The present invention will be further described below in conjunction with the accompanying drawings..

An automatic adhesive supply and metering mixing system for a solvent-free laminator comprises an adhesive tank unit, a metering and pumping unit, a mixing unit, an adhesive storage area on for the laminator, and level sensors for monitoring the adhesive level in the adhesive storage area.

The metering and pumping unit conveys the adhesive from adhesive tank unit to the storage area for the laminator, and the adhesive level sensors trigger the adhesive supply gear pumps based on the adhesive level. The adhesive tank unit includes a first tank for adhesive A and a second tank for adhesive B. The metering and pumping unit includes a gear pump and its related conveying pipeline, which quantitatively conveys adhesive A from the first tank and adhesive B from the second tank to the mixing unit for blending via the conveying pipelines, and then transports the mixed adhesive to the storage area for the laminator. The mixing unit comprises a mixing head and a static mixing tube.

Since the storage area for the laminator is elongated, when the mixing head dispenses adhesive, it moves from one side of the storage area to the other to evenly distribute the adhesive. The storage area is located between the adhesive storage cylinder and the metering cylinder of the coating station. The adhesive level sensors are positioned above the storage area. To reduce the measuring errors caused by differences in adhesive levels at the two sides of the storage area, a level sensors can be placed above each of the two sides or ends of the storage area, and the average adhesive level measured by the two level sensors is considered as the actual adhesive level. The upper and lower deviation limits is set above and below the target adhesive level, and the deviation limit amount can be set as required.

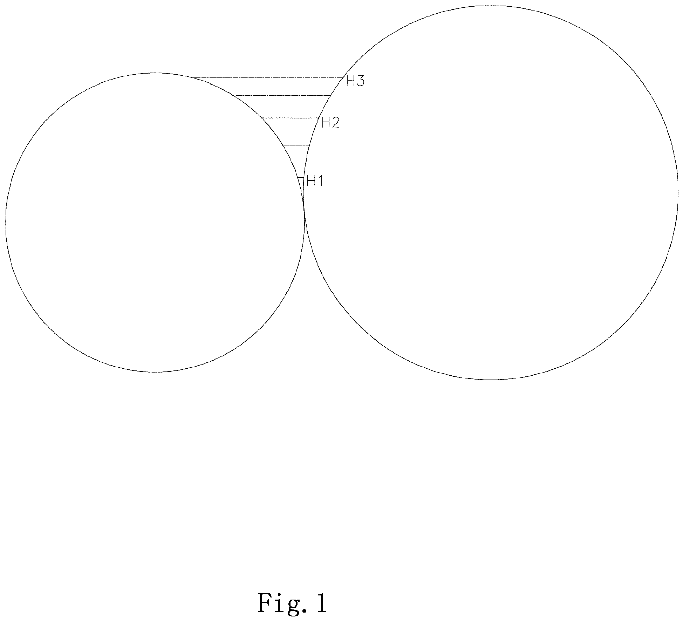

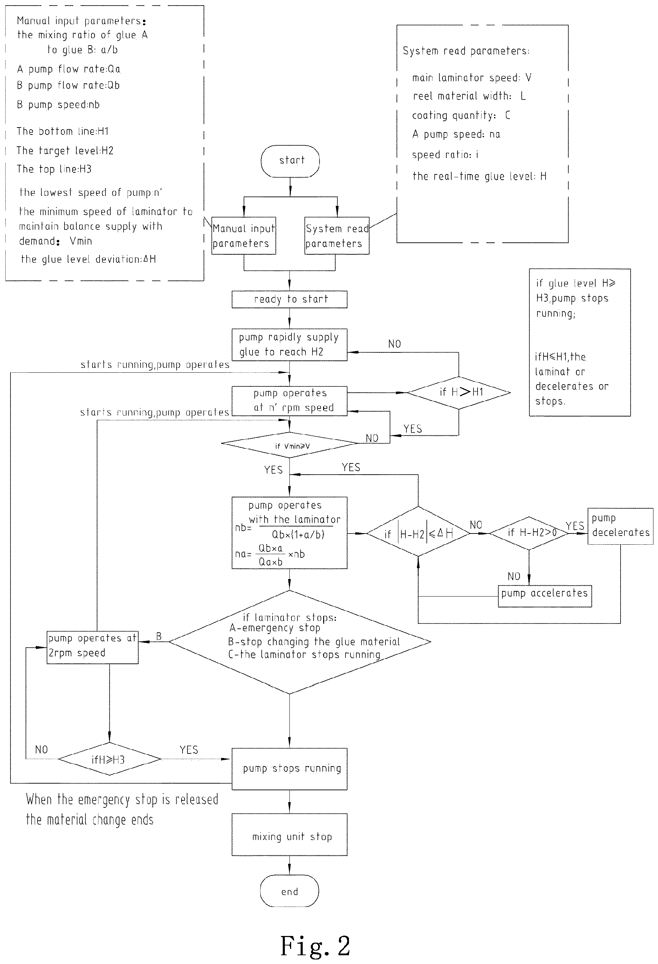

Figures 1 and 2 show and relate to continuous adhesive supply mode one:
The working procedure of the automatic adhesive supply and metering mixing system based on a continuous adhesive supply mode includes the following steps:
(1) When the coating station is ready to start, the metering and pumping unit rapidly supplies adhesive to the adhesive storage area for the laminator until the set target level is reached; then, the metering and pumping unit continues to supply adhesive at the lowest gear pump speed.
(2) When the laminator speed reaches the target speed, the gear pump starts running in sync with the laminator; as the laminator accelerates, the gear pump accelerates, and as the laminator decelerates, the gear pump decelerates accordingly.
(3) Taking the target level as the objective, when the adhesive level is higher than the upper deviation level limit, the gear pump begins to be forced to decelerate. When the adhesive level is lower than the lower deviation level limit, the gear pump starts to be forced to accelerate to ensure continuous adhesive supply to keep the actual adhesive level within the upper and lower deviation limits.
(4) A top line and a bottom line of the adhesive level are set for the storage area. When the adhesive level reaches the top line, the laminator accelerates or the gear pump stops running or both. When the adhesive level reaches the bottom line, the laminator decelerates or even stops.
(5) When the laminator stops running for the changeover of reels or jobs, the gear pump runs at its lowest speed. If the upper deviation limit is not reached when the laminator starts, steps (1) to (3) are executed. If the upper deviation limit is reached when the laminator is not running, the gear pump stops running. When the laminator stops due to pressing the emergency stop button, the gear pump also stops running immediately. When the laminator stops working, the gear pump stops running accordingly.

The core of the present invention is to maintain the adhesive amount supplied into the storage area so that it equals to the amount of adhesive consumed from the storage area.

The laminator section: suppose laminator speed is *V* (*m*/*min*), coating quantity is *C* (*g*/*m*²)*,* material width is *L* (*m*)*.*

The adhesive supply unit section: pump A speed is *nₐ* (*rpm*)*,* pump A flow rate is *Qₐ* (*g*/*r*)*,* pump B speed is *n_{b}* (*rpm*), pump B flow rate is *Q_{b}* (*g*/*r*)*,* and the mixing ratio of A adhesive to B adhesive is *a*/*b.*

The adhesive consumption is related to the laminator speed *V* (*m*/*min*), coating quantity *C* (*g*/*m*²)*,* and material width *L* (*m*)*.* Adhesive consumption = *V* * *C* * *L.* When the product and process requirements are determined, *C* and *L* are directly inputs with constant values, while *V* is a variable, representing the real-time speed of the laminator.

The pumps include pump A and pump B. The supply of adhesive is related to the pump A speed *nₐ,* pump A p flow rate *Qₐ,* pump B speed *n_{b},* and pump B flow rate *Q_{b}.* The flow rates *Qₐ* and *Q_{b}* depend on the pump's intrinsic flow rate and adhesive density, so *Qₐ* and *Q_{b}* are generally constant values determined through flow rate testing. The supply of adhesive = *nₐ* * *Qₐ* + *n_{b}* * *Q_{b}.*

The continuous adhesive supply formula: *V* * *C* * *L* = *nₐ* * *Qₐ* + *n_{b}* * *Q_{b}.*

The output of adhesive A and adhesive B has a relationship (mass ratio): *nₐ* * *Qₐ*/*n_{b}* * *Q_{b}* = *a*/*b.*

The relationship between pump B and laminator speed is *V* * *C* * *L* = *n_{b}* * *Q_{b}*(1 + *a*/*b*), then *n_{b}* = *V* * *C* * *L*/*Q_{b}*(1 + *a*/*b*), where *C, L,* and *a*/*b* are set values, and *Q_{b}* is a measured value.

The relationship between pump A and pump B speed is *nₐ* = *n_{b}* * *a* * *Q_{b}*/(*Qₐ* * *b*)*.*

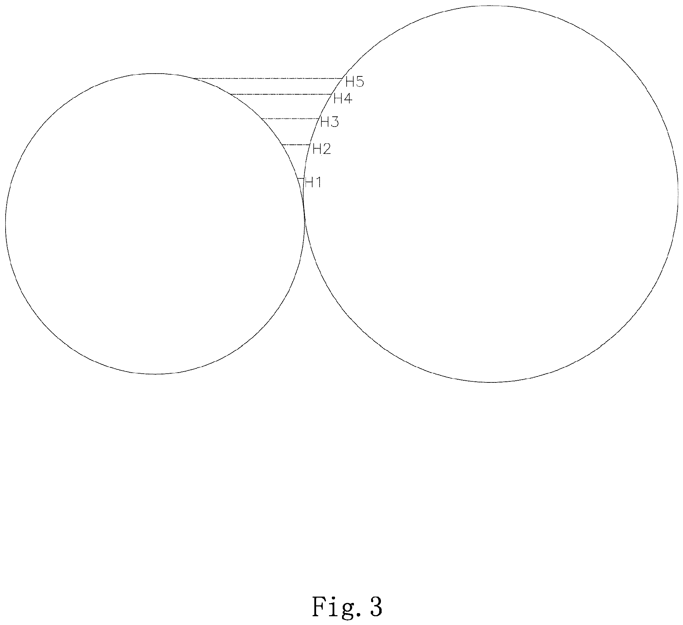

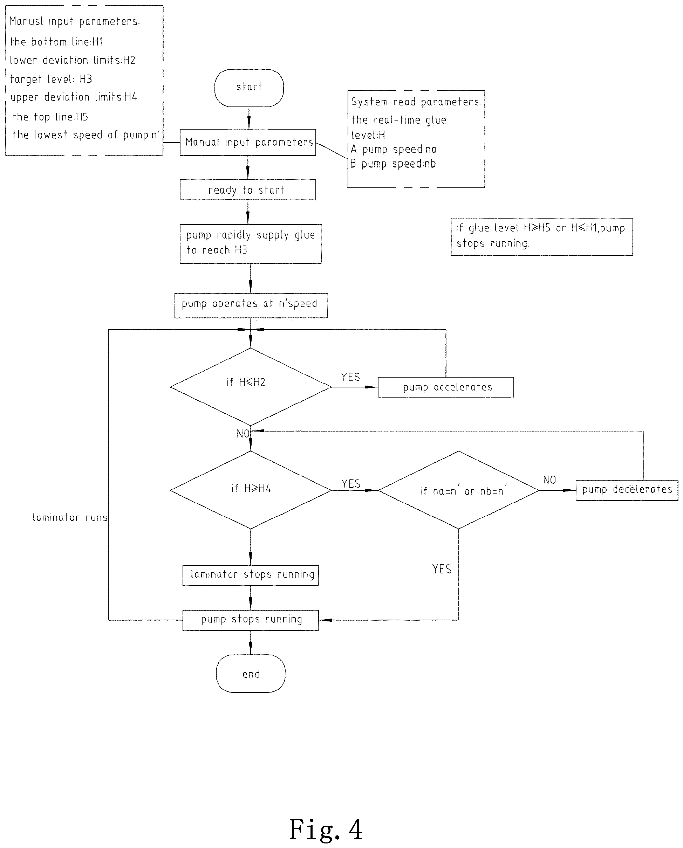

Figures 3 and 4 show and relate to continuous adhesive supply mode two is:
(1) When the coating station is ready to start, the metering and pumping unit rapidly supplies adhesive to the target level. Then, the unit continues to supply adhesive at the lowest gear pump speed.
(2) When the adhesive level reaches the acceleration/deceleration adhesive level or the lower/upper deviation level limits, the gear pump will automatically accelerate or decelerate.
(3) When the adhesive level reaches the deceleration adhesive level or upper deviation limit, the gear pump will decelerate. When the gear pump is already at its lowest speed, it will stop running until the adhesive level comes back into the deviation range, and then it will resume continuous operation. When the adhesive level reaches the acceleration adhesive level or the lower deviation limit, the gear pump will accelerate.
(4) When the adhesive level reaches the top line, the gear pump stops running. When the adhesive level reaches the bottom line, the laminator decelerates or stops.
(5) When the laminator stops running, the gear pump also stops running accordingly.

This invention can achieve continuous adhesive supply, significantly improving the stability of the entire adhesive supply system, which substantially reduces the frequency of gear pump starts and stops, mitigating the risks like asynchronization associated with frequent starts or valve openings, thereby fundamentally solving issues like asynchronized adhesive supply and local irregular incomplete curing. The adhesive supply speed can vary with the laminator speed, ensuring the expected adhesive quality.

## Claims

1. An automatic adhesive supply and metering mixing system based on a continuous supply mode, comprising: an adhesive tank unit, a metering and pumping unit, a mixing unit, an adhesive storage area for a laminator, and level sensors for monitoring the actual adhesive level in the adhesive storage area for the laminator;
the metering and pumping unit transport the adhesive from the mixing unit to the adhesive storage area;
the level sensors trigger a gear pump of the metering and pumping unit based on the actual adhesive level;
a target adhesive level and upper and lower deviation level limits are set from a laminator;
the level sensors control the gear pump's running speed to achieve a continuous adhesive supply with no breaks to keep the actual adhesive level within the deviation level limits.

2. An automatic adhesive supply and metering mixing system based on a continuous adhesive supply mode according to claim 1, wherein the adhesive tank unit comprises a first adhesive storage tank and a second adhesive storage tank, the adhesive metering and pumping unit comprises a gear pump and a conveying pipeline, the mixing unit comprises a mixing head and a static mixing tube, the adhesive storage area is located between an adhesive storage cylinder and a metering cylinder of the coating station , and the adhesive level sensors are positioned above the adhesive area.

3. An automatic adhesive supply and metering mixing system based on a continuous adhesive supply mode according to claim 1, wherein the adhesive level sensors are located above both sides of the storage area, and the average level measured by the two sensors is considered as the actual adhesive level.

4. An automatic adhesive supply and metering mixing system based on a continuous adhesive supply mode according to claim 2an adhesive supply method of the metering and pumping unit including the following steps:
(1) when the coating station is ready to start, the metering and pumping unit rapidly supplies adhesive to the storage area until the target adhesive level is reached, then the gear pump continues to supply adhesive at its lowest speed;
(2) when the laminator starts to run, the gear pump starts running in synchronization with the laminator such that as the laminator accelerates or decelerates the gear pump changes its speed accordingly to maintain the actual adhesive level around the target adhesive level;
(3) when the actual adhesive level is above the upper deviation level limit, the gear pump is forced to decelerate; and when the actual adhesive level is below the lower deviation level limit, the gear pump is forced to accelerate, so as to ensure continuous adhesive supply within the deviation level limits of the target adhesive level.

5. An automatic adhesive supply and metering mixing system based on a continuous adhesive supply mode according to claim 4, wherein both a top and a bottom line can be set from the laminator;
when the actual adhesive level reaches the top line, the laminator accelerates or the gear pump stops running; and
when the actual adhesive level reaches the bottom line, the laminator decelerates or begins to stops.

6. An automatic adhesive supply and metering mixing system based on a continuous adhesive supply mode according to claim 4 and configured such that:
when the laminator stops running due to changeover of reels or jobs, the gear pump starts to run at the lowest speed;
if the upper deviation level limit is reached and the laminator starts to run again, steps (1) to (3) are executed;
if the upper deviation level limit is reached and the laminator is not running, the gear pump stops running;
when the laminator is stopped by pressing the emergency stop button, the gear pump stops running; and
when the laminator stops working, the gear pump also stops running.

7. An automatic adhesive supply and metering mixing system based on a continuous adhesive supply mode according to claim 1 adhesive supply method of the metering and pumping unit including the following steps:
(1) when the coating station is ready to start, the metering and pumping unit rapidly supplies adhesive to the storage area until the target adhesive level is reached; then the gear pump continues to supply adhesive at its lowest speed;
(2) when the actual adhesive level exceeds or equals the upper or lower deviation level limits, the gear pump will automatically adjust its speed, either decelerating or accelerating accordingly.

8. An automatic adhesive supply and metering mixing system based on a continuous adhesive supply mode according to claim 7, if the actual adhesive level is equal to or above the upper deviation level limit, the gear pump starts to decelerate;
if the gear pump is already at its lowest speed the gear pump will stop running until the actual adhesive level falls within the upper and lower deviation level limits and then it will resume continuous operation; and
if the actual adhesive level is equal to or below the lower deviation level limit, the gear pump will then begin to accelerate.
